# EUROPEAN PATENT APPLICATION

(11) **EP 2 786 836 A1**
(43) Date of publication of application: **08.10.2014**
(21) Application number: 14163273.7
(22) Date of filing: 02.04.2014
(51) Int. Cl.: B23K 26/28, B23K 26/32, B60R 19/02, B60R 19/18, B60R 19/26, F16F 7/12

(54) **Method of manufacturing a shock energy absorbing strut for motor vehicles**

(30) Priority: 02.04.2013 IT BO20130145
(71) Applicant: Tiberina Solutions S.R.L., 06019 Umbertide (IT)
(72) Inventor: Ciocci, Daniele, 62014 Corridonia (IT)
(74) Representative: Manconi, Stefano

(57) **Abstract**

A shock energy absorbing strut (1) for motor vehicles is produced by aligning with each other two tubular bodies (5, 6) of different thicknesses, and welding the two tubular bodies (5, 6) to each other in the area of relative end faces (7) arranged in contact with one another.

## Description

The present invention concerns a method for manufacturing a shock energy absorbing strut for motor vehicles.

It is known that motor vehicles are provided with at least one strut, generally a front strut, fixed to the chassis or to the suspension members of the motor vehicle to absorb the energy resulting from impacts and collisions of the motor vehicle with other motor vehicles and/or with obstacles.

The strut comprises a tubular bar, which is fixed to the chassis or to the suspension members of the motor vehicle, has a constant thickness throughout the length of its longitudinal axis, and is shaped and deformed starting from an initial substantially cylindrical configuration thereof so that it has an optimal profile for the absorption of energy resulting from impacts and collisions.

The known struts for the absorption of impact energy for motor vehicles of the type described above have some drawbacks mainly deriving from the fact that, to guarantee correct operation of said struts, the tubular bar is sized with a constant thickness calculated on the basis of the impact energy to be absorbed by the strut.

Since the thickness calculated is actually necessary only in certain sections of the strut, the strut is relatively heavy and costly and its manufacture involves a consumption of material, in this case steel, greater than what is strictly necessary.

The object of the present invention is to provide a method for manufacturing a shock energy absorbing strut for motor vehicles which is free from the drawbacks described above and which is simple and inexpensive to implement.

According to the present invention a method is provided for manufacturing a shock energy absorbing strut for motor vehicles as claimed in the attached claims.
The present invention will now be described with reference to the accompanying drawings, which illustrate a non-limiting implementation example, in which:
figure 1 is a schematic perspective view of a preferred embodiment of the strut of the present invention;
figure 2 is a schematic perspective view of a first detail of the strut of figure 1; and
figure 3 is a schematic perspective view of a second detail of the strut of figure 1.

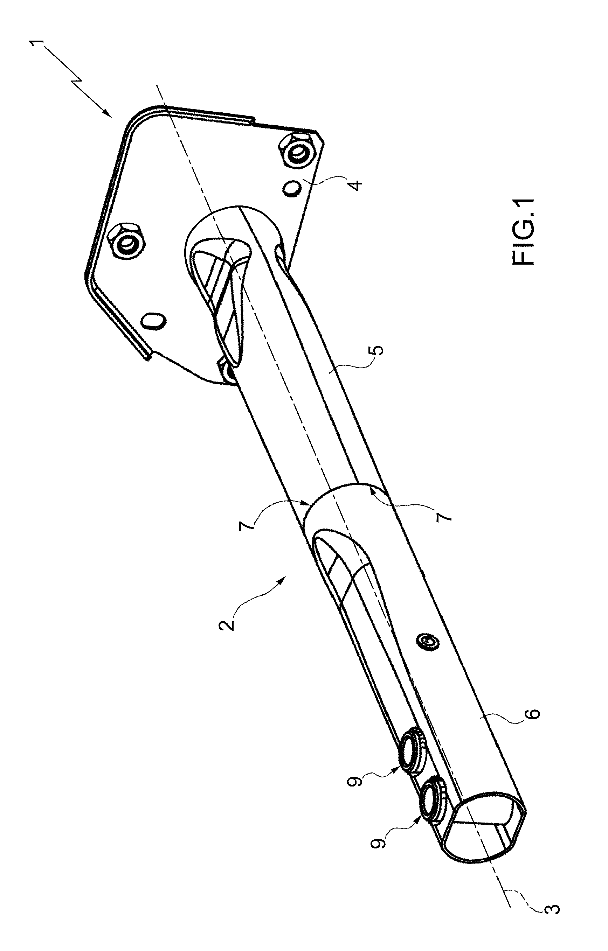

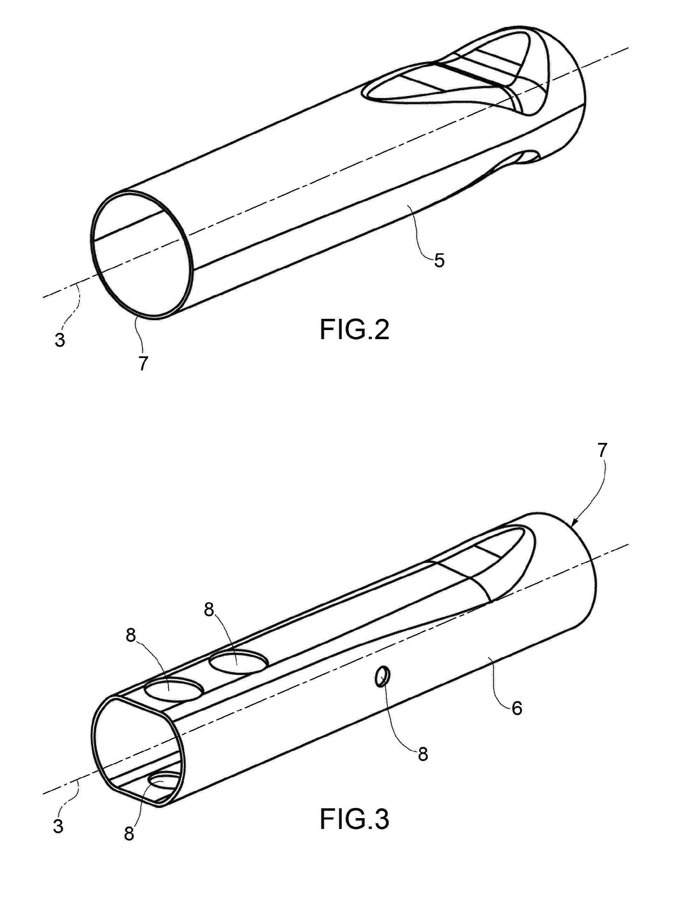

With reference to figures 1, 2, and 3, the number 1 indicates, as a whole, a strut, preferably a front strut, fixed to the chassis or to the suspension members of a motor vehicle (not illustrated) to absorb the energy resulting from impacts and collisions of the motor vehicle (not illustrated) with other motor vehicles (not illustrated) and/or with obstacles (not illustrated).

The strut 1 comprises a tubular bar 2 having a longitudinal axis 3, and a fixing plate 4 connected to the bar 2, for example by welding, to allow fixing of the strut 1 to the front part of the motor vehicle (not illustrated).

The bar 2 comprises two tubular bodies 5, 6 arranged in sequence along the axis 3, and of which the body 5 is a front tubular body connected to the plate 4 and the body 6 is a rear tubular body arranged on the opposite side of the plate 4 with respect to the body 5.

Each body 5, 6 is made of steel. Preferably, the steel has an ultimate tensile strength of at least 950 MPa, a yield strength of at least 450 MPa, and a percentage elongation of at least 45%.

The two bodies 5, 6 have different thicknesses, and are arranged in contact with each other in the area of respective end faces 7 which are, preferably but not necessarily, substantially perpendicular to the axis 3.

The faces 7 of the two bodies 5, 6 in contact with each other have the same respective external diameters.

In the case in point, the body 5 is not as thick as the body 6. In other words, the thickness of the body 5, which is the first to be stressed by the impact, is less than the thickness of the body 6.

Each body 5, 6 has an outer surface shaped according to an optimal profile for the absorption of energy resulting from impacts and collisions.

The body 6 furthermore has a plurality of holes 8 obtained in the body 6.

According to a preferred production method, the bar 2 is made:
by deforming and shaping each body 5, 6 starting from an initial substantially cylindrical configuration thereof;
by drilling the body 6 so as to obtain the holes 8;
by cutting at least one free end of each body 5, 6, preferably but not necessarily on a plane perpendicular to the axis 3 so as to obtain the relative faces 7; and
by welding the bodies 5, 6 to each other in the area of the faces 7 arranged in contact.

The plate 4 is connected to the body 5 preferably after welding the bodies 5, 6 to each other.

The plate 4 is connected to the body 5 by GMAW (Gas Metal Arc Welding) performed using austenitic stainless steel wire as the weld material and a mixture of Argon at 98% and carbon dioxide or oxygen at 2% as the protection gas.

Preferably, the welding between the bodies 5, 6 is performed with or without weld material by means of a laser welding device operating with a power of between 1000 Watt and 2000 Watt.

The laser welding device is of the solid state type with laser beam guided by optic fibre.

Inside at least one of the holes 8 a bush 9 is inserted, configured to allow fixing of the strut 1 to the chassis or to the suspension members of the motor vehicle (not illustrated) .

The bush 9 is connected to the body 6 in the area of the hole 8 by means of GMAW (Gas Metal Arc Welding) performed using austenitic stainless steel wire as the weld material and a mixture of Argon at 98% and carbon dioxide or oxygen at 2% as the protection gas.

According to an alternative production method, the bar 2 is produced:
by welding to each other the bodies 5, 6 in their initial substantially cylindrical configurations;
by deforming and shaping each body 5, 6 of the bar 2 starting from its initial cylindrical configuration;
by drilling the body 6 so as to obtain the holes 8; and
by cutting the free ends of each body 5, 6 of the bar 2.

The plate 4 is connected to the body 5, preferably but not necessarily, after welding the bodies 5, 6 to each other.

The plate 4 is connected to the body 5 by means of GMAW (Gas Metal Arc Welding) performed by using austenitic stainless steel wire as the weld material and a mixture of Argon at 98% and carbon dioxide or oxygen at 2% as the protection gas.

Preferably, the welding between the bodies 5, 6 is performed with or without weld material by means of a laser welding device operating with a power of between 1000 Watt and 2000 Watt.

The laser welding device is of the solid state type with laser beam guided by optic fibre.

Inside at least one of the holes 8 a bush 9 is inserted, configured to allow fixing of the strut 1 to the chassis or to the suspension members of the motor vehicle (not illustrated).

The bush 9 is connected to the body 6 in the area of the hole 8 by means of GMAW (Gas Metal Arc Welding) performed using austenitic stainless steel wire as the weld material and a mixture of Argon at 98% and carbon dioxide or oxygen at 2% as the protection gas.

## Claims

1. A method for manufacturing a shock energy absorbing strut for motor vehicles, the method comprising the steps of:
providing a first tubular body (5), which has a first thickness and is axially delimited by two end faces (7), which are opposite to one another;
providing a second tubular body (6), which has a second thickness, which is different from the first thickness, and is axially delimited by two end faces (7), which are opposite to one another;
aligning the two tubular bodies (5, 6) with one another so that a first end face (7) of the first tubular body (5) is in contact with a second end face (7) of the second tubular body (6), said first and second end faces (7) having the same respective external diameters; and
connecting by welding said first and second end faces (7).

2. A method according to claim 1, wherein the two tubular bodies (5, 6) are connected to one another by means of laser welding.

3. A method according to claim 1 or 2, wherein the two tubular bodies (5, 6) are connected to one another by means of a laser welding device working with a power ranging from 1000 Watts to 2000 Watts.

4. A method according to claim 3, wherein the laser welding device is of the solid state type with laser beam guided by optic fibres.

5. A method according to any of the previous claims, wherein the two tubular bodies (5, 6) are connected to one another by means of laser welding with or without weld material.

6. A method according to any of the previous claims, wherein the second thickness is greater than the first thickness, the method comprising, furthermore, the step of:
connecting the first tubular body (5) to a fixing plate (4), so as to fix the strut to a front part of a motor vehicle.

7. A method according to claim 6, wherein the fixing plate (4) is connected to the first tubular body (5) by means of GMAW (Gas Metal Arc Welding).

8. A method according to claim 7, wherein the GMAW is performed using austenitic stainless steel wire as the weld material.

9. A method according to claim 7 or 8, wherein the GMAW is performed using a mixture of Argon at 98% and carbon dioxide or oxygen at 2% as the protection gas.

10. A method according to any of the previous claims and comprising, furthermore, the step of:
deforming and shaping each tubular body (5, 6), starting from an initial substantially cylindrical configuration, before welding the two tubular bodies (5, 6) to one another.

11. A method according to claim 10 and comprising, furthermore, the step of:
cutting at least one free end of each tubular body (5, 6), in particular perpendicular to a longitudinal axis (3) of the tubular body (5, 6) itself, so as to obtain the end face (7) to be arranged in contact with the other tubular body (5, 6).

12. A method according to any of the claims from 1 to 9 and comprising, furthermore, the step of:
deforming and shaping each tubular body (5, 6), starting from an initial substantially cylindrical configuration, after having welded the two tubular bodies (5, 6) to one another.

13. A method according to claim 12 and comprising, furthermore, the step of:
cutting at least one of the free ends of the tubular bar (2) obtained by welding the two tubular bodies (5, 6) to one another.

14. A method according to any of the previous claims and comprising, furthermore, the steps of:
making at least one hole (8) in at least one said tubular body (5, 5);
inserting a bush (9) into the hole (8); and
connecting the bush (9) to the hole (8) by means of GMAW (Gas Metal Arc Welding).

15. A method according to claim 14, wherein the GMAW is performed using austenitic stainless steel wire as the weld material.

16. A method according to claim 14 or 15, wherein the GMAW is performed using a mixture of Argon at 98% and carbon dioxide or oxygen at 2% as the protection gas.

17. A method according to any of the previous claims, wherein each tubular body (5, 6) is made of steel.

18. A method according to any of the previous claims, wherein each tubular body (5, 6) is made of steel having an ultimate tensile strength that is at least equal to 950 MPa, a yield strength that is at least equal to 450 MPa and a percentage elongation that is at least equal to 45%.
